# EUROPEAN PATENT APPLICATION

(11) **EP 3 328 060 A1**
(43) Date of publication of application: **30.05.2018**
(21) Application number: 16200347.9
(22) Date of filing: 23.11.2016
(51) Int. Cl.: H04N 5/232, H04N 5/247, G06T 7/80

(54) **POSITIONING CAMERAS**

(71) Applicant: Nokia Technologies Oy, 02610 Espoo (FI)
(72) Inventor: Cricri, Francesco, 33100 Tampere (FI); Leppänen, Jussi Artturi, 33580 Tampere (FI); Eronen, Antti Johannes, 33820 Tampere (FI); Lehtiniemi, Arto Juhani, 33880 Lempäälä (FI)
(74) Representative: Higgin, Paul

(57) **Abstract**

A method comprising: receiving at least positioning information for one or more cameras; determining a reference position; determining for each of the one or more cameras, a respective direction from a position of each camera, as defined by the positioning information, to the determined reference position; determining, for each of the one or more cameras, a portion of a captured image corresponding to the respective direction; and enabling adaptation of the position information for the cameras.

## Description

### TECHNOLOGICAL FIELD

Embodiments of the present invention relate to positioning of cameras. In particular, they relate to methods, apparatus and computer programs for positioning of one or more cameras.

### BACKGROUND

In some circumstances, it may be desirable to use the position of a media-capture device. Examples of media-capture devices include a device that captures visual content (camera), a device that captures audio content (microphone) and a device that simultaneously captures audio-visual content (camera and microphone combination).

In some instances it may be desirable to know the position at which media content has been captured.

For example, in some circumstances it may be desirable to capture media content from a real space using multiple media-capture devices. In some circumstances it may be desirable to know the positions of these media-capture devices relative to each other.

It may be desirable to know the positions of media-capture devices relative to each other when captured audio content from multiple media-capture devices is being used for spatial audio processing.

Spatial audio processing is a technique that renders sound objects at a particular position within a rendered sound space. In some circumstances the position at which a sound object is rendered is dependent upon the position at which the sound object is recorded. For example, this may be the case where the sound object is recorded using an up-close microphone such as a boom-microphone or a Lavalier microphone and it is desired to render the sound captured by that up-close microphone at a position that accurately reproduces the position at which it was recorded. In such circumstances, it is necessary to accurately know the position of the up-close microphone and also its position relative to other media-capture devices such as cameras.

It may be desirable to know the positions of media-capture devices relative to each other when captured image content from multiple media-capture devices is being used for image processing. Having knowledge of the positions of cameras may be important, if the images captured by the cameras are to be combined in a seamless manner, for example, as a smooth view interpolation from one camera to another, creating a panorama image, or creating a volumetric 3D model of the scene. Knowing the positions of the cameras may be used to determine initial locations where pixel-by-pixel matching may be performed to combine the visual content from different cameras.

It will therefore be appreciated that there may be one or more different media-capture devices, which need to be accurately positioned. It is therefore important that what is used as a media-capture device's position accurately represents the actual position of that media-capture device.

### BRIEF SUMMARY

According to various, but not necessarily all, embodiments of the invention there is provided a method comprising: receiving at least positioning information for one or more cameras; determining a reference position; determining for each of the one or more cameras, a respective direction from a position of each camera, as defined by the positioning information, to the determined reference position; determining, for each of the one or more cameras, a portion of a captured image corresponding to the respective direction; and enabling adaptation of the position information for the cameras.

According to various, but not necessarily all, embodiments of the invention there is provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates an example of a method;
Figs. 2A to 2D illustrates an example of user-defining positioning information;
Figs. 3A to 5B illustrates an example of user-correction of positioning information (position);
Figs. 6A to 7B illustrates an example of user-correction of positioning information (orientation);
Fig 8A illustrates an example of a controller; and
Fig 8B illustrates an example of a computer program.

### DETAILED DESCRIPTION

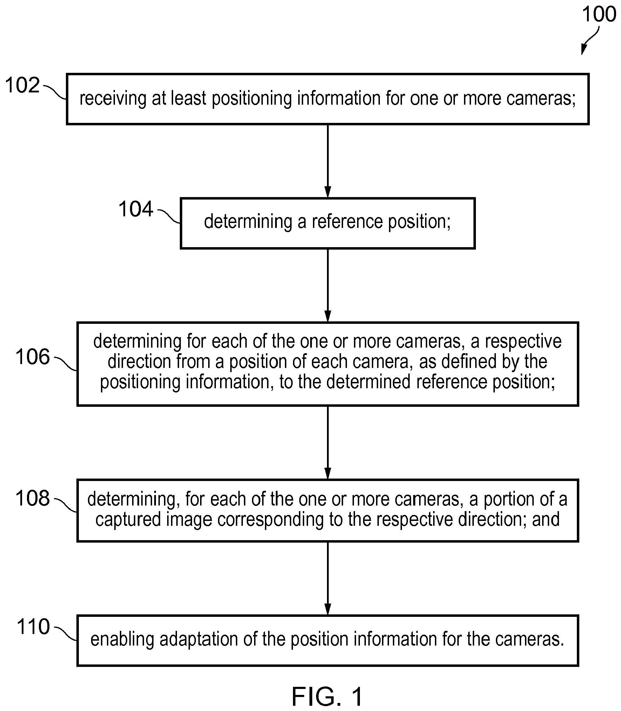

In the following description, and in relation to Figs 1 to 8B, reference will be made to a real space 402 in which one or more cameras 210 (or other media capture devices) are located at locations 430. This real space 402 is modeled as a virtual space 202, which may for example be used for spatial audio processing. The virtual space 202 locates the one or more cameras 210 (or other media capture devices) at positions 230.

It is generally desirable for the virtual space 202 to correspond to a real space 402 and for the positions 230 of each of the cameras 210 to accurately represent the actual locations 430 of the respective cameras 210 in the real space 402.

In order to differentiate between references to positions/locations within the virtual space 202 and the real space 402, in this description positions within the virtual space 202 will be referred to as 'positions' and positions within the real space 402 will be referred to as 'locations'. It should however be understood that the reference to a position or location is a reference to information that enables the positioning or location of the camera 210 (or other media capture device) within the relevant space. In some examples, the space may be a three-dimensional space and three orthogonal coordinates may be required to specify a position/location and in other examples the space may be a two-dimensional space and two orthogonal coordinates may be used to specify a position/location.

A camera may be referenced in a general sense, applicable for all cameras, using 210 and in relation to a specific camera using 210ᵢ. A position of a camera may be referenced in a general sense, applicable for all cameras, using 230 and in relation to a specific camera using 230ᵢ. In general the use of a subscript in relation to a reference label indicates a specific instance of the feature referenced by the reference numeral.

In the following description, for each of the cameras 230, the position 230ᵢ of a camera 210ᵢ defined by a displacement vector **r**ᵢ in the virtual space 202 and the location 230ᵢ of the camera 210ᵢ in the real space 402 is represented by displacement vector **R**ᵢ in real space 402.

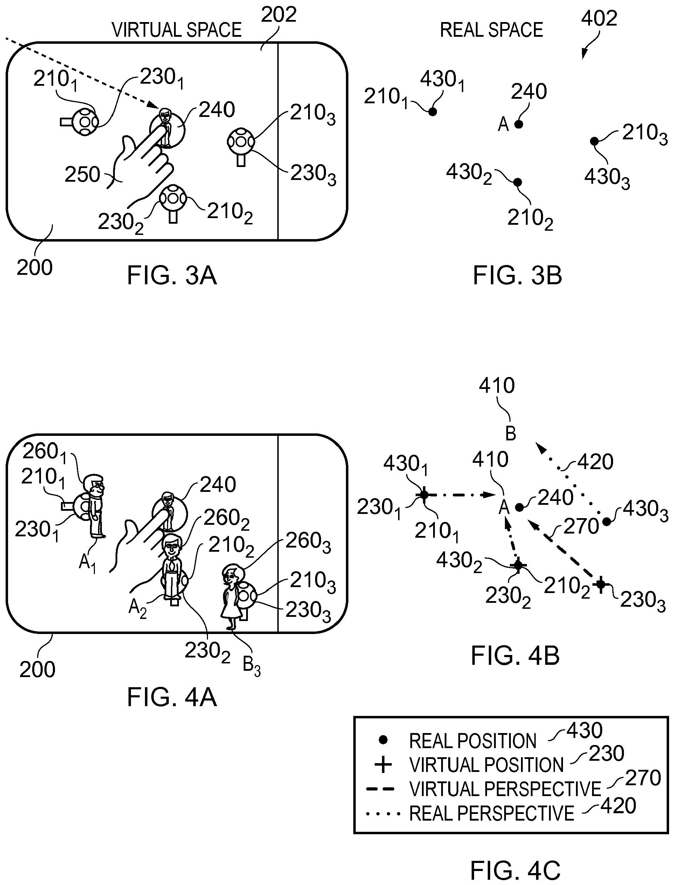

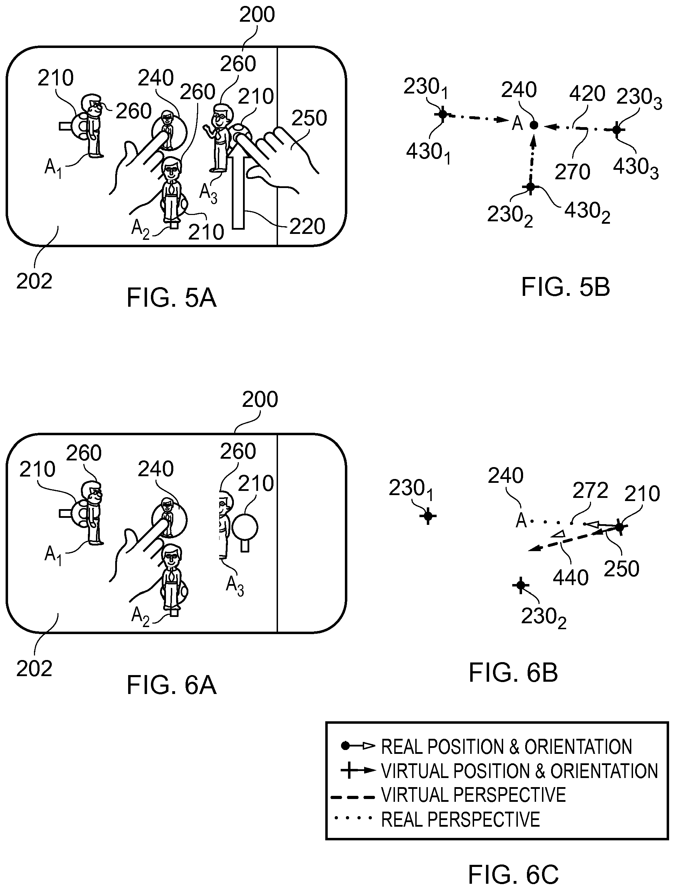

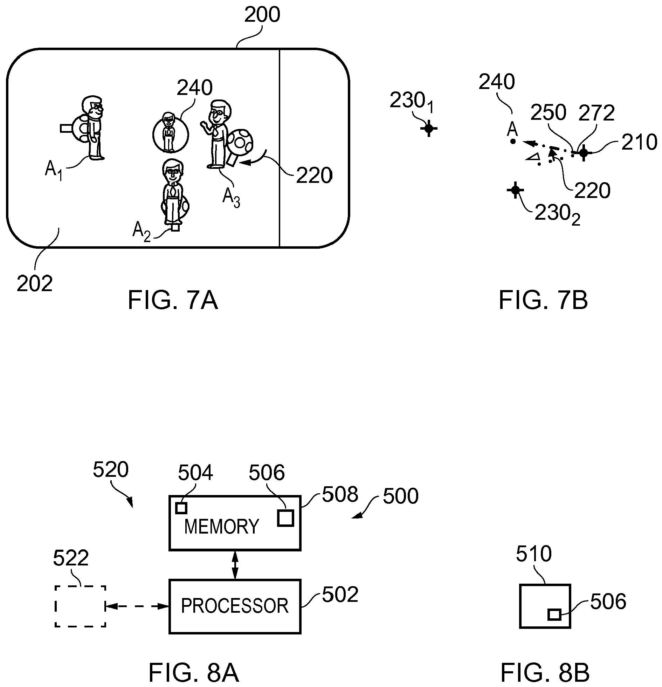

In the following description the direction 170ᵢ (e.g. bearing) of a reference position 240 (defined by a displacement vector **r**_{ref} ) relative to a position 230ᵢ of a camera 210ᵢ (defined by displacement vectors **r**ᵢ ) is used to determine a portion 260ᵢ of an image, captured by the camera 210ᵢ, that corresponds to the respective direction 170ᵢ e.g. (**r**_{ref} - **r**ᵢ). As illustrated in the particular examples of Figs 4A and 5A, the position 230ᵢ of a camera 210ᵢ (defined by displacement vectors **r**ᵢ) may be varied until the portion 260ᵢ of the image captured is what should be imaged at a reference location 240 (the reference position 240 mapped from the virtual space 202 to the real space 204). Also, as illustrated in the particular examples of Figs 6A and 7A, the orientation 250ᵢ of a camera 210ᵢ (defined as an offset from the displacement vectors **r**ᵢ) may be varied until the portion 260ᵢ of the image captured is what should be imaged at the reference location 240 using the actual orientation of the camera 210ᵢ.

Once cameras 210 have been accurately positioned other media capture devices, such as microphones, may be positioned relative to the cameras 210.

Fig. 1 illustrates an example of a method 100. The method 100 may be used for verifying (the term calibrating may also be used) one or more positions 230 of one or more media-capture devices 210. Although the method 100 is described for one or more cameras in the following example, for clarity of explanation, it should be understood that the same method 100 is applicable for a single camera 210.

Verifying in this sense means that a position 230 of the camera 210 in a virtual space 202 accurately reflects the real location 430 of the camera 210 in a real space 402. This ensures that the virtual spatial arrangement of the camera 210 in the virtual space 202 (that is their relative displacement from each other defined by the set {**r**ᵢ}) is the same as the actual spatial arrangement of the media-capture devices 210 in the real space 402 (that is their relative displacement from each other defined by the set {**R**ᵢ}).

The method 100 comprises, at block 102, receiving at least positioning information 504 for one or more cameras 210.

The method 100 comprises, at block 104, determining a reference position 240.

The method 100 comprises, at block 106, determining for each of the one or more cameras 210, a respective direction 170 from a position 230 of each camera 210, as defined by the positioning information 504, to the determined reference position 240.

The method 100 comprises, at block 108, determining, for each of the one or more cameras 210, a portion 260 of a captured image corresponding to the respective direction 270.

The method 100 comprises, at block 110, enabling adaptation of the positioning information 504 for the cameras 210.

The positioning information 504 defines at least the positions 230 of the cameras 210. It may, in addition, define the orientations 250 of some or all of the cameras 210.

Where the positioning information 504 defines not only the position 230ᵢ of a camera 210ᵢ but also defines the orientation 250ᵢ of the camera 210ᵢ, then the method 100 at block 110 enables adaptation of the position information 504 for that camera 210ᵢ by enabling adaptation of a position 230ᵢ of the camera 210ᵢ and/or enabling adaptation of an orientation 250ᵢ of the camera 210ᵢ.

In some, but not necessarily all examples, the positioning information 504 may be generated by a user. For example, the user may make an estimate of the positions 230 of the cameras 210 which are used to generate the positioning information 504. In some examples the estimate may be manually entered and in other examples a graphical user interface 200 may be provided to allow a user to graphically represent the different positions 230 of the different cameras 210. In other examples, however, the positioning information 504 may be wholly or partly generated automatically for example using positioning technology that tracks the location of a camera 210ᵢ. It is, however, to be appreciated that whatever approach is taken to obtain the positioning information 504 that defines the positions 230 (and possibly orientations 250) of the cameras 210 it is possible for there to be an error in calibration and for the positions 230 (and/or orientations 250) to not accurately represent the actual locations and orientations of the cameras 210 in the real space 402.

The method 100 enables a correction to be made in this calibration so that the positions 230 (and orientations 250) of the cameras 210 in the virtual space 202 accurately represent the locations 230 (and orientations) of the cameras 210 in the real space 402.

In some, but not necessarily all, examples, the user may determine the reference position 240 at block 104 of the method 100. For example, the user may manually enter a reference position 240 or may indicate a reference position 240 on a graphical user interface 200 provided for the purpose. In other examples, the reference position 240 may be automatically determined. It will be appreciated that at block 104 a portion 260ᵢ of a captured image corresponding to a respective direction 270ᵢ for each camera 210ᵢ is determined and that that respective direction 270ᵢ is defined by at least the position 230ᵢ of the camera 210ᵢ and the reference position 240. It may, therefore, be desirable that the reference position 240 corresponds to an object that is common to those portions {260ᵢ} of the captured images for the set of cameras {210ᵢ} corresponding to the respective directions {270ᵢ}. It may therefore be desirable by analyzing captured images from the cameras {210ᵢ} to identify a suitable object that may form the portion 260 of the captured images for each of the cameras {210ᵢ}. This may, for example, be achieved by using computer vision algorithms. The identified object defines the reference position 240.

In some, but not necessarily all, examples, the method 100 may additionally comprise displaying the determined portions 260 of the captured images for each of the one or more cameras 210. This allows a user to quickly determine whether the determined portions 260 of the captured images for each of the one or more cameras 210ᵢ is an expected image, for example of an object located at the reference position 240. If the portion of the captured image that is displayed is not what is expected, then the user will immediately understand that the position 230ⱼ of the camera 210ⱼ that has captured that portion 260ⱼ of an image is incorrect and needs to be adjusted. The incorrect position 230ⱼ of the camera 210ⱼ results in an incorrect respective direction 270 from the position 230ⱼ of the camera 210ⱼ to the reference position 240 and as a consequence an incorrect portion 260ⱼ of a captured image corresponding to the respective direction 270ⱼ for that camera 210ⱼ is displayed.

In some, but not necessarily all, examples, the images may be still images. In other examples, the images may be video images.

In some, but not necessarily all, examples, one or more or all of the cameras 210 are panoramic cameras comprising multiple camera sensors that have different overlapping fields of view. The captured image for a camera 210ᵢ in this instance may be considered to be the composite image formed by the combination of the images taken from the different multiple camera sensors. The fields of view may overlap in some examples to create a 360° panorama. The images may overlap in the horizontal plane, for example, to create a composite 360° horizontal field of view and, in some examples also overlap in the vertical direction to create a 180° vertical field of view. In this instance, the determination, for each of the one or more cameras 210, of a portion of a captured image corresponding to the respective direction 270 involves the selection of a camera sensor for the respective direction 270 and then the determination of a portion of the captured image for that selected camera sensor corresponding to the respective direction 270.

In some, but not necessarily all, examples, the user adapts the positioning information 504 to bring the position 230ᵢ of a camera 210ᵢ more closely into alignment with the location 430ᵢ of the cameras 210ᵢ in the real space 402. It may, for example, be desirable that as the user adapts the position 230ᵢ of a camera 210ᵢ that a respective direction 270ᵢ from the current adapted position 230ᵢ of that camera 210ᵢ to the reference position 240 is determined and that there is a new determination for that camera 210ᵢ of a portion 260ᵢ of a captured image corresponding to the respective direction 270ᵢ and that the determined portion 260ᵢ is immediately displayed. This enables there to be a real time update of a view from a real location 430ᵢ of the camera 210ᵢ in a direction determined by the changing position of the virtual position 230ᵢ relative to the reference position 240.

The respective direction 270ᵢ from a position 230ᵢ of a camera 210ᵢ to the reference position 240 may be defined in terms of vectors as r_{ref} - rᵢ, where r_{ref} is the vector displacement of the reference position 240 in the virtual space 202. This respective direction (dᵢ) 270ᵢ is then used to determine the equivalent portion 260ᵢ of the captured image which has been captured at that time from the real location 430ᵢ of the camera 210ᵢ. This portion 260ᵢ of the image will include an object (if any) which is in the respective direction dᵢ from the real location 430ᵢ of the camera 210ᵢ. The respective direction dᵢ in the virtual space 202 therefore defines a virtual perspective of the camera 210ᵢ from its current (incorrect) position 210ᵢ and a real perspective 420ᵢ from the correct real location 430ᵢ to an incorrectly imaged object in the real space 402. If one considers the reference position 240 to correspond to a location defined by the displacement **R**ᵢ in the real space 402, then the object is to modify dᵢ such that the portion 260ᵢ of the image displayed for the camera 210ᵢ corresponds to an object at the reference location 240 in real space 402. This is achieved when **r_{ref}** - **rᵢ** = **R_{ref}** - **Rᵢ**. As r_{ref} and R_{ref} are the same displacement, this is achieved when the position 230ᵢ in virtual space 202 (rᵢ ) is aligned with the location 430ⱼ in the real space 402 **(Rᵢ**).

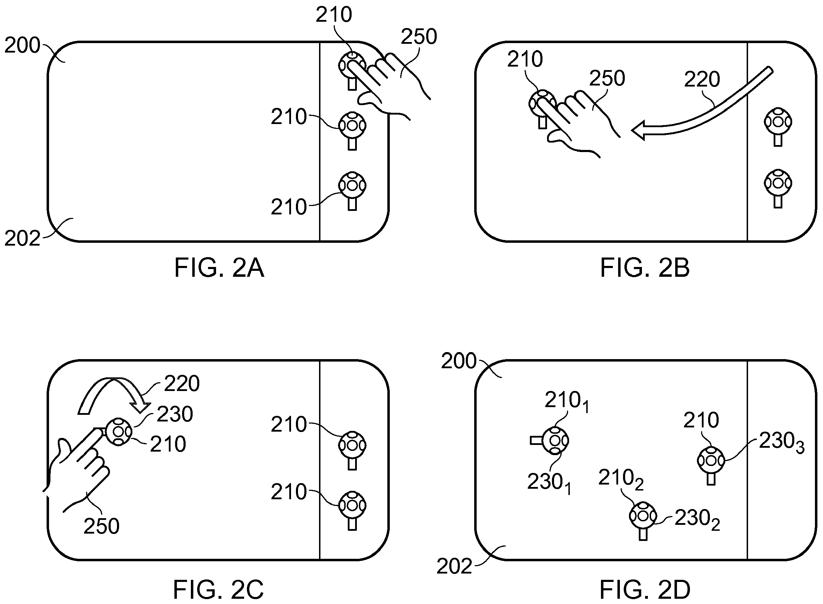

One particular implementation of the invention will now be described with reference to Figs. 2A to 5B. In this example, a graphical user interface 200 is provided to allow a user 250 to see icons representing the cameras 210ᵢ at their positions 230ᵢ, an icon representing the reference position 240 and also see the determined portions 260ᵢ of the captured images for each of the cameras 210ᵢ.

The graphical user interface 200 comprises a display for displaying icons representing the cameras 210 at the positions 230, the reference position 240 and the portions 260ᵢ of the captured images for each of the cameras 210ᵢ. The display displays the virtual space 202.

In order to improve the clarity of the figures, the icons for the cameras 210 and for the reference position 240 are referred to in the figures using the same references 210 as is used for the cameras and 240 as is used for the reference position 240. The positions 230 of the cameras 210 and the reference position 240 within the display correspond to positions in the virtual space 202 linearly scaled to fit in the display.

The graphical user interface 200 may be a touch sensitive interface that allows a user 250 to move an icon representing a camera 210ᵢ by touching that icon and dragging it to a position and then releasing the finger from the display. This type of drag and drop operation is well understood in the art.

As illustrated in Fig. 2A, the definition of position information 504 may be performed by a user 250 using the graphical user interface 200. In this example, a different icon represents each of the different cameras 210ᵢ. As illustrated in Fig 2B, the user 250 selects a first one of the cameras 210₁ by touching the displayed icon and then moving 220 the displayed icon 210₁ to a desired position 230₁. As illustrated in Fig. 2C, in some examples, the user may also be able to reorient the camera 210₁ changing an orientation 250ᵢ of the camera 210ᵢ by rotating 220 the icon representing the camera 210₁ within the graphical user interface 200. When the user releases their touch from the icon representing the camera 210ᵢ this causes the positioning information 504 for the camera 210₁ to be recorded in a memory. This positioning information 504 records the position 230₁ of the camera 210₁ as represented by the icon for that camera in the graphical user interface 200 and, in some examples, also records the orientation 250ᵢ of that camera 210₁ as represented by the orientation of the icon for that camera in the graphical user interface 200.

As illustrated by Fig. 2D, this process is repeated for the other cameras 210 (if any).

Fig. 3A illustrates the graphical user interface 200 and a representation of the virtual space 200 comprising the cameras 210ᵢ. This is a visual representation of the positioning information 504. Fig. 3B illustrates a representation of the real space 402 and the actual locations 430₁ of the cameras 210ᵢ in the real space 402.

As illustrated in Fig. 3A, the user determines the reference position 240 by touching a portion of the graphical user interface 200. Where the graphical user interface 200 is touched defines a position within the virtual space 202 which is recorded as the reference position 240 in the virtual space 202. This reference position 240 in the virtual space 202 has a corresponding reference location 240 in the real space 402. It is the portion of the real space 402 that corresponds to the reference location 240 that the user will be attempting to image by correctly locating the cameras 210ᵢ within the virtual space 202. It is therefore likely that in practice the user would identify a suitable object (A) within the real space 402 that the user will try to image correctly at each of the cameras 210 by changing the positions 230 of the relevant cameras 210ᵢ within the virtual space 202.

Fig. 4A illustrates an example of the graphical user interface 200 when at least one of the cameras 210ᵢ is miss-positioned in the virtual space 202. In this example, the positioning information 504 incorrectly positions the camera 210₃. Referring to Fig. 4B, in order to explain the operation of the method 100 the real actual positions 430₁ of the cameras 210ᵢ are illustrated with a solid circle and the positions of the cameras 210ᵢ should they be positioned in the real space 402 according to the virtual positions 230ᵢ are illustrated using crosses according to the legend illustrated in Fig. 4C. It will be seen from this example that for the cameras 210₁ and 210₂ the real position 430₁ and the virtual position 230₁ are coincident and that the real position 430₂ and the virtual position 230₂ are coincident. The first camera 210₁ and the second camera 210₂ are correctly positioned- that is, the virtual positions 230 correspond to the real positions 430. However for the camera 210₃ the virtual position 230₃ does not correctly correspond to the real location 430₃.

Referring back to Fig. 1, the method at block 106 determines for each of the one or more cameras 210ᵢ a respective direction dᵢ from a position 230ᵢ of each camera 210ᵢ, as defined by the positioning information 504, to the determined reference position 240 **dᵢ** = **r_{ref}** - **rᵢ** then at block 108, the method 100 determines for each of the one or more cameras 210ᵢ a portion 260ᵢ of a captured image corresponding to the respective direction **dᵢ**. For example, the direction **dᵢ** may be converted into a bearing Arg(**dᵢ**) and this bearing may be used to identify a corresponding portion of the captured image. The portion 260ᵢ of the captured image that has been determined in this way is then displayed in the graphical user interface 200 adjacent the icon for the respective camera 210ᵢ.

Referring to Fig. 4B, if one considers the image captured by the camera 210₃ then the narrower field of view or perspective that is used to define the portion 260₃ of the captured image that is displayed in the graphical user interface 200 is defined by the relative displacement of the (incorrect) virtual position 230 from the reference position 240 as indicated by the virtual perspective arrow 270 in Fig. 4B. However, the captured image is in fact captured from the real location 430₃. The real perspective 420 corresponding to the virtual perspective 270 therefore in fact images an incorrect object 410 (B) as illustrated in Fig. 4A.

In Fig 4A, each portion 260ᵢ of a captured image is labeled according to the object captured and the perspective from which it is captured. The portion 260₁ comprises object A, captured from the location 430₁ and therefore labeled A₁. The portion 260₂ comprises object A, captured from the location 430₂ and therefore labeled A₂. The portion 260₃ comprises object B, captured from the location 430₃ and therefore labeled B₃.

Fig. 5A illustrates the movement 220 by the user 250 of the icon representing the third camera 230₃ within the graphical user interface 200. The user 250 touches the icon and drags it to a new position 230. The method 100 then repeats blocks 106, 108 and 110. As a consequence of the change in the virtual position 230₃ of the camera 210₃, the respective direction d₃ as illustrated by the virtual perspective 270 in Fig. 4B also changes. As a consequence the real perspective 420 changes to be parallel to the changing virtual perspective 270 and the portion 260₃ of the real space 402 also changes. It is therefore possible to have a real time display of how the change in the virtual position 230₃ of the camera 210₃ changes the displayed portion 260₃ of the real space 402. When the virtual position 230₃ is coincident with the real location 430₃ then the virtual perspective 270 and the real perspective 420 are aligned (**r**ᵢ = **R**ᵢ) and the portion 260₃ of the captured image displayed in the graphical user interface 200 adjacent the icon for the third camera 210₃ now displays the expected object A.

It will therefore be appreciated that the above-described graphical user interface 200 provides an intuitive interface that allows a user to adapt the positioning information 504 so that the positions 230 of the cameras 210 defined by that positioning information 504 correctly identify the locations 430 of the cameras 210 in real space 402. Furthermore, it is possible for there to be real time visual feedback as the user 250 moves the icon representing a camera 210ᵢ so that the user 250 can accurately locate the icon and bring the virtual position 230ᵢ for that camera 210ᵢ into alignment with the real location 430ᵢ.

Figs. 6A to 7B illustrate an additional aspect of some examples of the method 100 previously described with reference to Figs 3A to 5B. In these examples, the portion 260ᵢ of the captured image that is displayed depends not only upon the virtual position 230ᵢ of the camera 210ᵢ but also the virtual orientation 250ᵢ of the camera 210. In these examples, it is therefore necessary not only to bring the virtual position 230 into coincidence with the real location 430 but it is also necessary to bring the virtual orientation 250 into alignment with the real orientation 272.

In the examples of Figs. 6A to 7B, it is assumed that positional alignment has already been achieved and the real location 430 and the virtual position 230 are coincident. Fig. 6B illustrates that the virtual orientation 250 is not aligned with the real orientation 272 of the camera 210. This results in an offset Δ to the respective direction d. It is necessary to adjust for this offset if the portion 260 of the captured image that is displayed in the graphical user interface 200 is to be the whole of the expected object A. The offset Δ between the virtual orientation 250 and the real orientation 272 results in the virtual perspective 270 and the real perspective 440 being non-parallel. The consequences in this example, illustrated in Fig. 6A, are that only a portion of the expected object A is included in the displayed portion 260.

In order to explain the operation of the method 100 the real actual position 430 and orientation 272 of the camera 210 are illustrated with a solid circle and hollow arrowhead and the positions and orientations of the camera 210 should it be positioned in the real space 402 according to the virtual position 230 and virtual orientation 250 are illustrated using a cross and a solid arrowhead, according to the legend illustrated in Fig. 6C

Fig. 7A illustrates an example of how the user may adapt the positioning information 504 to change the orientation 250ᵢ of a camera 210ᵢ. In this example, the user touches the icon representing the camera 210ᵢ and rotates the icon within the graphical user interface 200 by performing a rotation movement 220 (as previously described in relation to Fig. 2C). As illustrated in Fig. 7B, this rotation brings the virtual perspective 250 into alignment with the real perspective 272. It is again possible, in this example, to provide a real time feedback of the consequences of rotating the icon representing the camera 210ᵢ. As the camera icon is rotated, the orientation 250ᵢ of the camera 210ᵢ is updated and the blocks 106 to 110 of the method 100 are repeated causing the displayed portion 260ᵢ to be updated in real time as the orientation 250ᵢ of the camera 210ᵢ changes. It is therefore straightforward for the user not only to determine the correct position 230ᵢ of a camera 210ᵢ but also to determine the correct orientation 250ᵢ of the camera 210ᵢ.

The method 100 may controlled by a controller 500. For example, a controller 500 may provide the GUI 200.

Implementation of a controller 500 may be as controller circuitry. The controller 500 may be implemented in hardware alone, have certain aspects in software including firmware alone or can be a combination of hardware and software (including firmware).

As illustrated in Fig 8A the controller 500 may be implemented using instructions that enable hardware functionality, for example, by using executable instructions of a computer program 506 in a general-purpose or special-purpose processor 502 that may be stored on a computer readable storage medium (disk, memory etc) to be executed by such a processor 502.

The processor 502 is configured to read from and write to the memory 508. The processor 502 may also comprise an output interface via which data and/or commands are output by the processor 502 and an input interface via which data and/or commands are input to the processor 502.

The memory 508 stores a computer program 506 comprising computer program instructions (computer program code) that controls the operation of the apparatus 520 when loaded into the processor 502.

The apparatus 520 comprising user input/output interface 522 and controller 500. In some but not necessarily all examples, the user input/output interface 522 comprises a display or a touch-sensitive display.

The computer program instructions, of the computer program 506, provide the logic and routines that enables the apparatus to perform the methods illustrated in Figs 1-7B. The processor 502 by reading the memory 508 is able to load and execute the computer program 506.

The apparatus 520 therefore comprises:
at least one processor 502; and
at least one memory 508 including computer program code
the at least one memory 508 and the computer program code configured to, with the receiving at least positioning information for one or more cameras;
cause determining a reference position 240;
cause determining for each of the one or more cameras 210, a respective direction 270 from a position 230 of each camera 210, as defined by positioning information 504, to the determined reference position 240;
cause determining, for each of the one or more cameras 210, a portion 260 of a captured image corresponding to the respective direction 270; and cause enabling adaptation of the position information 504 for the cameras 210.

As illustrated in Fig 8B, the computer program 506 may arrive at the apparatus 520 via any suitable delivery mechanism 510. The delivery mechanism 510 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 506. The delivery mechanism may be a signal configured to reliably transfer the computer program 506. The apparatus 520 may propagate or transmit the computer program 506 as a computer data signal.

Although the memory 508 is illustrated as a single component/circuitry it may be implemented as one or more separate components/circuitry some or all of which may be integrated/removable and/or may provide permanent/semi-permanent/ dynamic/cached storage.

Although the processor 502 is illustrated as a single component/circuitry it may be implemented as one or more separate components/circuitry some or all of which may be integrated/removable. The processor 502 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Figs 1-7 may represent steps in a method and/or sections of code in the computer program 506. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The controller 500 may be a module, for example.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
receiving at least positioning information for one or more cameras;
determining a reference position;
determining for each of the one or more cameras, a respective direction from a position of each camera, as defined by the positioning information, to the determined reference position;
determining, for each of the one or more cameras, a portion of a captured image corresponding to the respective direction; and
enabling adaptation of the position information for the cameras.

2. A method as claimed in claim 1, further comprising after enabling adaptation of the position information for the cameras:
determining for each of the one or more cameras, a respective direction from a position of each camera, as defined by the adapted positioning information, to the determined reference position; and
determining, for each of the one or more cameras, a portion of a captured image corresponding to the respective direction; and
enabling adaptation of the position information for the cameras.

3. A method as claimed in claim 1 or 2, wherein the positioning information defines positions and orientations of cameras

4. A method as claimed in any preceding claim, wherein enabling adaptation of the position information for the cameras comprises enabling adaptation of a position of at least one camera and/or enabling adaptation of an orientation of at least one camera.

5. A method as claimed in any preceding claim, wherein the position information is generated by a user.

6. A method as claimed in any preceding claim, wherein the user determines the reference position.

7. A method as claimed in any preceding claim, comprising displaying the determined portions of the captured images for each of the one or more cameras.

8. A method as claimed in any preceding claim, wherein the images are still images or video images.

9. A method as claimed in any preceding claim, wherein the cameras are panoramic cameras comprising multiple camera sensors.

10. A method as claimed in any preceding claim, wherein the user adapts the position information of a camera and wherein determined portions of the captured images for each of the one or more cameras are updated in real time.

11. A method as claimed in any preceding claim, wherein the position information is generated in response to a user positioning in a visual display one or more icons representing the one or more cameras by moving the icons within the display to positions in the display representing positions of the cameras.

12. A method as claimed in any preceding claim, wherein the user determines the reference position by touching a touch sensitive visual display displaying icons representing the cameras at positions in the display representing positions of the cameras.

13. A method as claimed in any preceding claim, comprising displaying in a visual display the portion of a captured image captured by a camera adjacent an icon representing the camera that captured the image, wherein the icon is at a position in the display representing a positions of the camera.

14. A method as claimed in any preceding claim, wherein the user adapts the position information of a camera by moving an icon representing the camera at a position in the display representing a position of the camera and wherein determined portions of the captured images for each of the one or more cameras are updated in real time.

15. An apparatus comprising means for performing the method of any preceding claim or a computer program that when loaded into a processor enables the method of any preceding claim.
